# EUROPEAN PATENT APPLICATION

(11) **EP 1 962 189 A1**
(43) Date of publication of application: **27.08.2008**
(21) Application number: 08151795.5
(22) Date of filing: 22.02.2008
(51) Int. Cl.: G06F 9/445

(54) **Apparatus and method for updating boot logo image in portable terminal**

(30) Priority: 22.02.2007 KR 20070017701
(71) Applicant: Samsung Electronics Co., Ltd., Suwon-si, Gyeonggi-do 442-742 (KR)
(72) Inventor: Min, Jeong-Hwan, Gyeonggi-do (KR); Kang, Seung-Bum, Gyeonggi-do (KR)
(74) Representative: Grünecker, Kinkeldey, Stockmair & Schwanhäusser Anwaltssozietät

(57) **Abstract**

An apparatus and method for updating a boot logo image in a portable terminal are provided. In the method, a boot logo image selected by a user and a boot loader are separately stored in a memory unit.

## Description

### PRIORITY

This application claims priority under 35 U.S.C. § 119 to an application filed in the Korean Intellectual Property Office on February 22, 2007 and allocated Serial No. 2007-17701, the contents of which are incorporated herein by reference.

### BACKGROUND OF THE INVENTION

### 1. Field of the Invention

The present invention relates generally to an apparatus and method for updating a boot logo in a portable terminal, and in particular, to an apparatus and method for separately storing a boot logo image and a boot loader.

### 2. Description of the Related Art

A boot logo image is an image that is initially displayed as soon as a portable terminal is booted. Generally, boot logo images show information of terminal manufacturers or telecommunication enterprises, and are considered important because they do so.

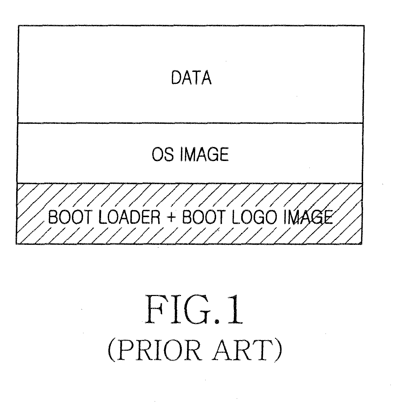

FIG. 1 illustrates a conventional flash Read-Only Memory (ROM). Referring to FIG. 1, a boot logo image is stored together with a boot loader in order to display the boot logo image in a short time when a portable terminal is turned on. The boot loader initializes hardware and displays the boot logo image on a display unit when the portable terminal is turned on. The boot logo image is contained as a header file on a boot loader binary.

Because the boot logo image is contained in the boot loader necessary for booting the portable terminal, a boot loader containing a new boot logo image must be generated in order to update the boot logo image.

However, it is very dangerous to generate the boot loader containing the new boot logo image. For example, if the boot loader is generated in order to update only the boot logo image, the portable terminal may have to be repaired because an error in the boot logo image influences the boot loader.

Further, the users are inconvenienced by having to make a new request to the corresponding terminal manufactures in order to update the boot logo images showing the corporate images of the telecommunication enterprises.

### SUMMARY OF THE INVENTION

An object of the present invention is to substantially solve at least the above problems and/or disadvantages and to provide at least the advantages below. Accordingly, an object of the present invention is to provide an apparatus and method for updating a boot logo image in a portable terminal.

Another object of the present invention is to provide an apparatus and method for separately storing a boot logo image and a boot loader in a flash ROM.

According to the present invention, a method for updating a boot logo image in a portable terminal includes separately storing a boot logo image selected by a user and a boot loader in a memory unit, executing the boot loader to read the boot logo image when the portable terminal is turned on, and displaying the read boot logo image.

According to the present invention, an apparatus for updating a boot logo image in a portable terminal includes a memory unit for separately storing a boot loader and a boot logo image, and a control unit for storing a boot logo image selected by a user and displaying the boot logo image read through the boot loader when the portable terminal is turned on.

### BRIEF DESCRIPTION OF THE DRAWINGS

The above and other objects, features and advantages of the present invention will become more apparent from the following detailed description when taken in conjunction with the accompanying drawings in which:
FIG. 1 illustrates a structure of a conventional flash ROM;
FIG. 2 illustrates a structure of a flash ROM according to the present invention;
FIG. 3 illustrates a portable terminal according to the present invention;
FIG. 4 illustrates a method of storing a boot logo image in a memory of a portable terminal according to the present invention; and
FIG. 5 illustrates a method of displaying a boot logo image on a portable terminal according to the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail for the sake of clarity and conciseness.

According to the present invention, because a boot logo image and a boot loader are separately stored in a portable terminal, only the boot logo image can be updated without updating the boot loader.

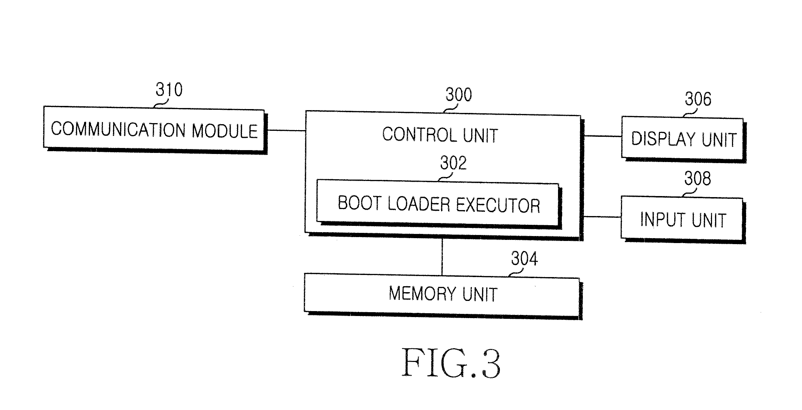

FIG. 3 illustrates a portable terminal according to the present invention. Referring to FIG. 3, the portable terminal includes a control unit 300, a memory unit 304, a display unit 306, an input unit 308 and a communication module 310. The control unit 300 includes a boot loader executor 302.

The control unit (e.g., a MicroProcessor Unit (MPU)) 300 controls an overall operation of the portable terminal. In addition, the control unit 300 controls an operation of storing a boot logo image in a flash memory region when the boot logo image is downloaded through an access provider. When the portable terminal is turned on, the boot loader executor 302 executes a boot loader to display the boot logo image.

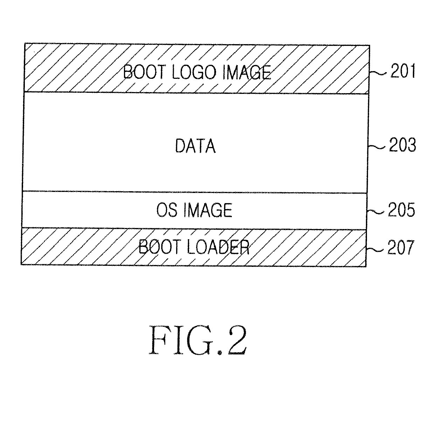

The memory unit 304 includes a ROM, a Random Access Memory (RAM) and a flash ROM. The memory unit 304 stores a control program of the portable terminal and stores temporary data generated during operations, system parameters and backup data. As illustrated in FIG. 2, a flash memory ROM stores a boot logo image 201, data 203, an Operating System (OS) image 205 and a boot loader 207. In particular, the flash ROM separately stores the boot logo image 201 and the boot loader 207.

The display unit 306 displays such information as status information generated during operations, as well as numerals and characters. Under the control of the control unit 300, the display unit 306 displays the boot logo image when the portable terminal is turned on.

The input unit 308 includes a plurality of keys for inputting numeric and/or character information and a plurality of function keys for setting various functions. The input unit 308 provides the control unit 300 with a key input data corresponding to a key pressed by a user.

The communication module 310 processes Radio Frequency (RF) signals transmitted/received through an antenna. For example, during a transmission operation, the communication module 310 channel-codes and spreads data to be transmitted. During a reception operation, the communication module 310 converts a received RF signal into a baseband signal and despreads and channel-decodes the baseband signal into an original signal. The communication module 310 provides the control unit 300 with the boot logo image received from a boot logo upgrade server.

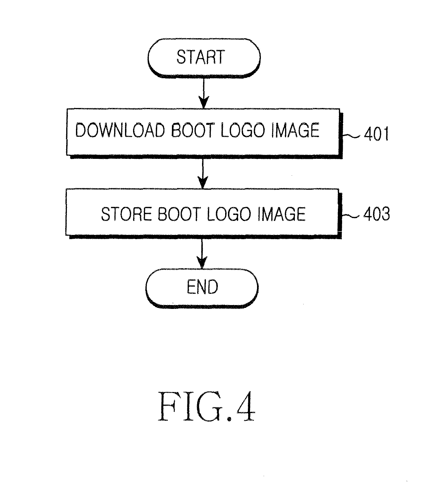

FIG. 4 illustrates a method of storing a boot logo image in a memory of a portable terminal according to the present invention.

Referring to FIG. 4, the portable terminal is connected through an access provider to an update server of a telecommunication enterprise or a terminal manufacturer and then downloads a boot logo image in step 401. The access provider can communicate with the update server using well-known protocols such as Trivial File Transfer Protocol (TFTP), HyperText Transfer Protocol (HTTP), File Transfer Protocol (FTP) and Universal Serial Bus (USB).

In step 403, the portable terminal stores the downloaded boot logo image in the flash ROM region, that is, a boot logo image region of FIG. 2.

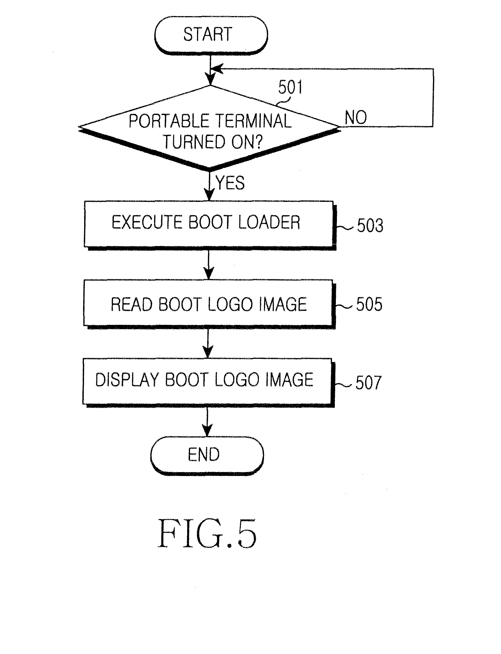

FIG. 5 illustrates a method of displaying a boot logo image in a portable terminal according to the present invention.

Referring to FIG. 5, when the portable terminal is turned on in step 501, the process proceeds to step 503 to execute the boot loader under the control of the boot loader executor 302.

In step 505, the portable terminal reads the boot logo image 201. In step 507, the portable terminal displays the read boot logo image 201 on a display unit 306.

Although it has been described that the boot logo image is downloaded from the update server of the telecommunication enterprise or the terminal manufacturer, the boot logo image can also be updated with a photograph or a moving picture selected by the user of the portable terminal. That is, the updating of the boot logo image can be achieved by the user of the portable terminal as well as the telecommunication enterprise or the terminal manufacturer.

As described above, because the boot logo image and the boot loader are separately stored, only the boot logo image can be updated without updating the boot loader. Therefore, a new boot logo image can be updated without damaging the boot loader.

Alternate embodiments of the present invention can also comprise computer readable codes on a computer readable medium. The computer readable medium includes any data storage device that can store data that can be read by a computer system. Examples of a computer readable medium include magnetic storage media (such as ROM, floppy disks, and hard disks, among others), optical recording media (such as CD-ROMs or DVDs), and storage mechanisms such as carrier waves (such as transmission through the Internet). The computer readable medium can also be distributed over network coupled computer systems so that the computer readable code is stored and executed in a distributed fashion. Also, functional programs, codes, and code segments for accomplishing the present invention can be construed by programmers of ordinary skill in the art to which the present invention pertains.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method for updating a boot logo image (201) in a portable terminal, comprising the steps of:
separately storing a boot logo image (201) selected by a user and a boot loader (207) in a memory unit (304);
executing the boot loader (207) to read the boot logo image (201) when the portable terminal is turned on; and
displaying the read boot logo image (201).

2. The method of claim 1, wherein the memory unit (304) further comprises a flash Read Only Memory (ROM).

3. The method of claim 1 or 2, wherein the boot logo image (201) is downloaded from an update server of a telecommunication enterprise or a terminal manufacturer through an access provider, or the boot logo image (201) is updated with an image selected by the user.

4. The method of claim 3, wherein the access provider communicates with the update server using one of Trivial File Transfer Protocol (TFTP), HyperText Transfer Protocol (HTTP), File Transfer Protocol (FTP) and Universal Serial Bus (USB).

5. An apparatus for updating a boot logo image (201) in a portable terminal, comprising:
a memory unit (304) for separately storing a boot loader (207) and a boot logo image (201); and
a control unit (300) for controlling an operation of storing the boot logo image (201) selected by a user and displaying the boot logo image (201) read through the boot loader (207) when the portable terminal is turned on.

6. The apparatus of claim 5, wherein the memory unit (304) further comprises a flash Read Only Memory (ROM).

7. The apparatus of claim 5 or 6, wherein the boot logo image (201) is downloaded from an update server of a telecommunication enterprise or a terminal manufacturer through an access provider, or the boot logo image (201) is updated with an image selected by the user.

8. The apparatus of claim 7, wherein the access provider communicates with the update server using one of Trivial File Transfer Protocol (TFTP), HyperText Transfer Protocol (HTTP), File Transfer Protocol (FTP) and Universal Serial Bus (USB).

9. The apparatus of one of claims 5 to 8, further comprising:
means (302) for executing the boot loader (207) to read the boot logo image (201) when the portable terminal is turned on; and
means (306) for displaying the read boot logo image (201).

10. A computer-readable recording medium having recorded thereon program for updating a boot logo image in a portable terminal, comprising:
a first code segment, for separately storing a boot logo image (201) selected by a user and a boot loader (207) in a memory unit (304);
a second code segment, for executing the boot loader (207) to read the boot logo image (201) when the portable terminal is turned on; and
a third code segment, for displaying the read boot logo image (201).
